# EUROPÄISCHE PATENTSCHRIFT

(11) **EP 0 961 680 B1**
(45) Veröffentlichungstag und Bekanntmachung des Hinweises auf die Patenterteilung: **22.11.2000**
(21) Anmeldenummer: 98901930.2
(22) Anmeldetag: 07.01.1998
(51) Int. Cl.: B29C 49/48, B29C 49/24

(54) **VERFAHREN UND VORRICHTUNG ZUR HERSTELLUNG VON KUNSTSTOFF-FORMTEILEN DURCH BLASFORMEN**
PROCESS AND DEVICE FOR PRODUCING BLOW-MOULDED PLASTIC MOULDINGS
PROCEDE ET DISPOSITIF DE FABRICATION DE PIECES MOULEES EN PLASTIQUE PAR SOUFFLAGE

(30) Priorität: 21.02.1997 DE 19706838
(43) Veröffentlichungstag der Anmeldung: 08.12.1999
(73) Patentinhaber: Möller Plast GmbH, 33649 Bielefeld (DE)
(72) Erfinder: WROBBEL, Werner, D-33335 Gütersloh (DE)
(74) Vertreter: Schirmer, Siegfried, Dipl.-Ing.
(86) Internationale Anmeldenummer: DE9800014
(87) Internationale Veröffentlichungsnummer: WO9836893

(56) Entgegenhaltungen:
- EP-A- 0 626 248
- EP-A- 0 738 580
- WO-A-96/01212
- DE-A- 19 536 768
- PATENT ABSTRACTS OF JAPAN vol. 014, no. 347 (M-1002), 26.Juli 1990 & JP 02 120024 A (SHATAI KOGYO KK), 8.Mai 1990,
- PATENT ABSTRACTS OF JAPAN vol. 007, no. 189 (M-237), 18.August 1983 & JP 58 090926 A (NIHON PURASUTO KK), 30.Mai 1983,
- PATENT ABSTRACTS OF JAPAN vol. 017, no. 041 (M-1359), 26.Januar 1993 & JP 04 259532 A (KYORAKU CO LTD), 16.September 1992,

## Beschreibung

Die Erfindung betrifft ein Verfahren zur Herstellung von Kunststoff-Formteilen durch Blasformen, das von den Merkmalen des unabhängigen Anspruchs 1 ausgeht, sowie eine Vorrichtung auf der Basis der Merkmale des Oberbegriffs des unabhängigen Anspruchs 5 zur Durchführung des Verfahrens.

In der Automobilindustrie werden - gegebenenfalls beschichtete oder teilbeschichtete - Kunststoff-Formteile, z.B. für Armaturenbretter, benötigt, die mit tiefen Ausnehmungen oder Durchbrüchen mit Hinterschneidungen zur Aufnahme bzw. Durchführung von Armaturen und sonstigen Funktionselementen ausgebildet sind. Durch die Ausführung derartiger Formteile als im Extrusionsblasverfahren hergestellte Hohlkörper wird eine hohe Stabilität bei gleichzeitiger Elastizität erreicht. Die Ausformung starker, scharfkantiger Konturen und Hinterschneidungen bereitet bei diesem an sich vorteilhaften Verfahren insofern Schwierigkeiten, als der beim Blasformen aus einem zähflüssigen thermoplastischen Kunststoff frisch extrudierte Kunststoffschlauch, der in ein Blasformwerkzeug eingebracht und durch Einblasen von Luft an bzw. in die Innenkonturen des Werkzeugs gepreßt wird, insbesondere bei engen und flach ausgebildeten extrudierten Schläuchen und weit in den Innenraum des Werkzeugs ragenden Konturen, an seinen Innenwänden zusammenstoßen kann, so daß aufgrund der daraus folgenden Verschweißungen eine fehlerfreie Herstellung des Formteils nicht gewährleistet ist. Die Gefahr von unerwünschten Verschweißungen besteht insbesondere bei der Ausformung von Hinterschneidungen bzw. in Bereichen mit sehr geringem Abstand zwischen den Innenwänden zum späteren Einbringen von Durchbrüchen. Wenn das Formteil an der Außenfläche oder Teilen derselben zusätzlich noch mit einer Beschichtung versehen werden soll, kann es dabei zur vorzeitigen Verklebung des Kaschierungsmaterials mit der Schlauchoberfläche kommen, oder das Kaschierungsmaterial legt sich nicht richtig an die scharfkantige Innenkontur an bzw. wird verzerrt oder überdehnt.

Um die Gefahr der gegenseitigen Berührung der Schlauch-Innenwände und deren damit verbundenes Verschweißen zu mindern oder eine vorzeitige Berührung zwischen der Außenseite des extrudierten Kunststoffschlauches und dem Kaschierungsmaterial zu vermeiden, ist es bereits bekannt, im Blasformwerkzeug an eine Vakuumpumpe angeschlossenen Vakuumbohrungen vorzusehen, um den extrudierten Kunststoffschlauch bzw. das Kaschierungsmaterial in einer bestimmten Lage zu fixieren. Bei stark ausgeprägten Konturen wird diese Maßnahme den Anforderungen an eine fehlerfreie Herstellung der Formteile jedoch nicht gerecht.

Aus der JP-A-58090926 ist es bereits bekannt, zur Ausbildung eines mit scharfkantigen Konturen oder Vertiefungen versehenen Blasform-Hohlkörpers zunächst den in die geteilte Form eingebrachten Kunststoffschlauch durch Einblasen von Luft zu weiten und anschließend mit einem in den Innenraum der Form verfahrbaren Schieber eine scharfkantige Vertiefung in dem blasgeformten Hohlkörper auszubilden sowie gegenüberliegende Innenwandbereiche unter Verwendung eines weiteren Schiebers miteinander zu verpressen.

Des weiteren wird in der EP-A-0626248 die Herstellung von mit Handgriffen versehenen Hohlkörpern im Blasverfahren beschrieben, wobei der Handgriff mit Hilfe eines in die Wandung des Blasformwerkzeugs integrierten und in dessen Hohlraum verfahrbaren Stempels ausgeformt wird.

Die bekannten Blasformwerkzeuge mit integriertem Schieber sind jedoch insofern nachteilig, als mit diesen eine allmähliche, schonende Einwirkung auf den Kunststoffschlauch und eine abgestufte und variable Formgebung zur Ausbildung tiefer, scharfkantiger Konturen nicht möglich ist.

Der Erfindung liegt daher die Aufgabe zugrunde, ein Verfahren zur Herstellung von durch Extrusions-Blasformen gefertigten, gegebenenfalls mit einer Oberflächenbeschichtung versehenen Kunststoff-Formteilen mit starken, scharfkantigen Konturen oder Durchbrüchen mit Hinterschneidungen zu entwickeln und eine entsprechende Vorrichtung so auszubilden, daß bei geringer Ausschußquote Fertigerzeugnisse in hoher Qualität bereitgestellt werden können.

Erfindungsgemäß wird die Aufgabe ausgehend von einem Blasverfahren gemäß den Merkmalen des Oberbegriffs des Anspruchs 1 in der Weise gelöst, daß die mechanische Formgebung zur abgestuften und schonenden Einwirkung auf die Formteilwandung in mehreren Teilschritten durchgeführt wird.

Der frisch extrudierte Kunststoffschlauch wird somit in einem von stark ausgeprägten Vorsprüngen freien Innenraum des Blasformwerkzeugs geweitet, vorgeformt und gehalten, so daß die gerade bei engen Kunststoffschläuchen bestehende Gefahr von Verschweißungen zwischen den Innenwandflächen deutlich herabgesetzt ist bzw. gar nicht auftritt. In einem zweiten Verformungschritt werden dann mit einem gegen die Außenwand des in dem Blasformwerkzeug gehaltenen, geweiteten Kunststoffschlauchs gefahrenen Werkzeug die scharfkantigen Ausnehmungen oder Hinterschneidungen in mehreren Teilschritten eingepreßt, um dadurch eine allmähliche, differenzierte Verformung und unterschiedliche Konturenausbildungen erzielen zu können.

In Ausgestaltung des erfindungsgemäßen Verfahrens werden die Schlauchinnenwände zur Bildung von Hinterschneidungen, die von nachträglich in diesen Bereich einzubringenden Durchbrüchen ausgehen, mehr oder weniger stark aufeinandergepreßt. Die eigentliche Hinterschneidung entsteht dabei nach Einbringen eines Durchbruches in dem zusammengepreßten Bereich. Durch den gewählten Preßdruck kann die Wandstärke in dem so entstandenen Hinterschneidungsbereich variabel festgelegt werden. Durch das Zusammenpressen in mehreren Verformungsschritten ist es schließlich auch möglich, in ein und demselben Hinterschneidungsbereich unterschiedliche Wandstärken auszubilden oder auch zwischen den beiden Innenwänden Hohlräume zu erzeugen bzw. zu belassen.

In vorteilhafter Weiterbildung der Erfindung erfolgt der gesamte Formgebungsvorgang in Verbindung mit einer Oberflächenbeschichtung des Formteils, indem das in das Blasformwerkzeug eingelegte Beschichtungsmaterial durch den pneumatischen Innendruck und das gegen die Außenseite des Kunststoffschlauchs verfahrene Formwerkzeug an die Oberfläche bzw. an die scharfkantigen Konturen des Formteils gedrückt wird. Dadurch ist ein fehlerfreies Aufbringen der Beschichtungsbahn, das heißt ohne vorhergehende Verklebung, Verschiebung oder Verzerrung, möglich.

Die erfindungsgemäße Vorrichtung zur Durchführung des Verfahrens ist ausgehend von den Merkmalen des Oberbegriffs des unabhängigen Anspruchs 5 dadurch gekennzeichnet, daß der Verformungsschieber aus mehreren Schieberteilen gebildet ist, die unabhängig oder im Gleichlauf antreibbar sind. Dadurch kann die Formgebung der scharfkantigen Ausnehmungen oder Hinterschneidungen zur Erzielung unterschiedlicher Formen, Schichtdicken oder Hohlräume in mehreren Teilschritten durchgeführt und außerdem ein sorgfältiger, schonender Verformungsvorgang vorgenommen werden.

Die Schieberteile sind parallel nebeneinander angeordnete Schieberlamellen. An deren schmalen Längsseiten können zusätzliche, senkrecht zu den Schieberlamellen angeordnete Schiebersegmente bewegbar geführt sein, während an den äußeren breiten Seiten der Schieberlamellen voreilende Schieberelemente angeordnet sein können.

In den Unteransprüchen sind weitere Merkmale und vorteilhafte Ausgestaltungen der Erfindung angegeben.

Ein Ausführungsbeispiel der Erfindung wird anhand der beigefügten Zeichnung näher erläutert. Es zeigen:
- Fig. 1: eine Schnittansicht eines erfindungsgemäßen Blasformwrkzeugs mit einem mehrteiligen Verformungsschieber nach dem Aufweiten und während des Haltens des Kunststoffschlauches, aber vor Ausformung des Hinterschneidungsbereichs in Verbindung mit einem nachträglich einzubringenden Durchbruch;
- Fig. 2: eine Schnittansicht des Blasformwerkzeugs nach Fig. 1, jedoch nach der Ausformung des Hinterschneidungsbereichs;
- Fig. 3: eine Vorderansicht eines aus drei Schieberlamellen bestehenden Verformungsschiebers; und
- Fig. 4: eine Vorderansicht einer weiteren Ausführungsform eines mehrteiligen Verformungsschiebers mit an den Schmalseiten der Schieberlamellen senkrecht angeordneten Schiebersegmenten.

Die Herstellung eines mit Hinterschneidungen oder scharfkantigen Ausnehmungen auszubildenden Kunststoff-Formteils, zum Beispiel eines Armaturenbretts, im Extrusions-Blasverfahren erfolgt in der Weise, daß der zwischen die beiden Werkzeughälften 3a und 3b eines Blasformwerkzeugs 3 eingebrachte, frisch extrudierte Kunststoffschlauch 5 an seinen Enden geschlossen und nach Schließen der beiden Werkzeughälften 3a, 3b in einem ersten Verformungsschritt durch Aufbringen eines Luftüberdrucks so geweitet wird, daß seine Außenwand an den ebenen und leicht konturierten Innenflächen der beiden Werkzeughälften 3a, 3b im wesentlichen, das heißt mit Ausnahme extrem ausgeprägter Vertiefungen, zum Beispiel der um 90° zur Werkzeugtrennung 1 abgewinkelten Innenkontur 8 in der Werkzeughälfte 3a, anliegt und durch den Luftüberdruck auch gehalten wird.

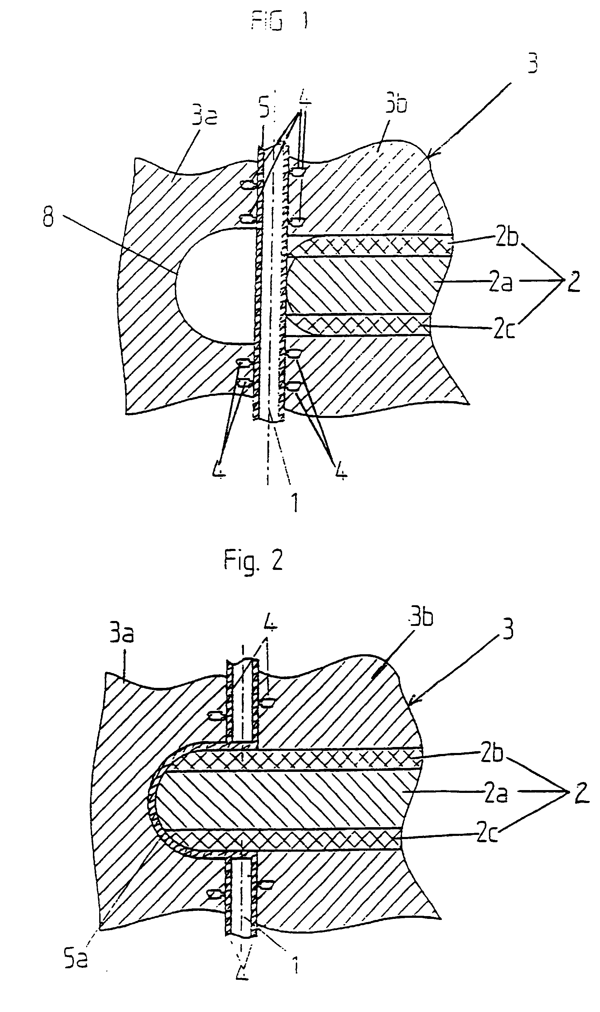

Nach der in einem ersten, in Fig. 1 dargestellten Verfahrensschritt durchgeführten Verformung des extrudierten Kunststoffschlauchs durch Blasformen mittels Luftüberdruck erfolgt in einem zweiten Verfahrensschritt eine mechanische Ausformung-der in dem Fertigerzeugnis auszubildenden Hinterschneidung durch einen in der Werkzeughälfte 3b geführten, antreibbaren und während des Blasformvorgangs mit der Innenfläche der Werkzeughälfte 3b (Fig. 1) fluchtenden Verformungsschieber 2. Aufgrund dessen, daß vor und während des Blasformvorgang stark konturierte Teile des Blasformwerkzeugs nicht in den Raum zwischen den beiden Werkzeughälften 3a und 3b ragen, wird eine unerwünschte Berührung der Schlauchinnenseiten, die eine Qualitätsminderung oder Unbrauchbarkeit des Fertigerzeugnisses zur Folge hätte, verhindert.

Wie aus den Figuren 1 und 2 ersichtlich ist, sind außerdem in den beiden Werkzeughälften 3a und 3b an eine Vakuumpumpe (nicht dargestellt) angeschlossene Vakuumbohrungen 4 vorgesehen, die den Kunststoffschlauch 5 durch leichten Unterdruck an den Innenwänden des Blasformwerkzeugs 3 zusätzlich halten und dadurch eine weitere Sicherheit gegen vorzeitige Berührung der Innenwände und damit deren unbeabsichtigtes Verschweißen oder gegen die Verschiebung einer in das Werkzeug eingelegten Beschichtungsbahn (nicht dargestellt) bieten.

Der ausgeformte Kunststoffschlauch 5 in Fig. 2 ist ein Formteil, bei dem die Schlauchinnenwände im Bereich des Verformungsschiebers 2 miteinander verpreßt und verschweißt werden und gleichzeitig in einer Innenkontur 8 in der Werkzeughälfte 3a mit dem Verformungsschieber 2, dessen Form der der Ausnehmung 5a entspricht, die gewünschte Ausnehmung 5a ausgeformt wird. Sofern die Ausnehmung 5a durchbrochen wird, bildet sie gleichermaßen einen Hinterschneidungsbereich.

Bei der in Fig. 2 wiedergegebenen Darstellung ist es auch möglich, die Endstellung des Verformungsschiebers 2 so festzulegen, daß die Verdichtung zwischen den beiden Schlauchseiten und damit die Schichtdicke im Hinterschneidungsbereich variiert werden kann.

Bei gegenüber der in den Figuren 1 und 2 gewählten Darstellung größerem Abstand zwischen den Schlauch-innenwänden ist es gleichermaßen denkbar, eine größere Ausnehmung (scharfkantig abgewinkelte Vertiefung) nur auf einer Schlauchseite auszuformen, ohne daß sich die Schlauchinnenseiten berühren.

Nach dem Formgebungsvorgang wird der Verformungsschieber 2 wieder in die mit der Innenwand der Werkzeughälfte 3b fluchtende Ausgangsstellung zurückgefahren, so daß das fertige Formteil problemlos aus dem Blasformwerkzeug 3 entnommen werden kann.

Gemäß der Zeichnung ist der Verformungsschieber 2 aus drei parallel nebeneinander angeordneten und gleichzeitig oder unabhängig voneinander verschiebbaren Schieberlamellen 2a bis 2c gebildet. Dadurch ist es, wie die Figuren 1 und 2 zeigen, zum einen möglich, den Verformungsschieber durch Zurückfahren des an seiner Vorderseite vorstehenden Teils, hier der mittleren Schieberlamelle 2a, in eine Flucht mit der Innenkontur der betreffenden Werkzeughälfte 3a zu bringen. Gemäß Fig. 1 wird bei der Ausformung der Ausnehmung 5a zunächst die mittlere Schieberlamelle 2a und danach der Schieber 2 insgesamt aus der Wandung der Werkzeughälfte 3b herausgefahren.

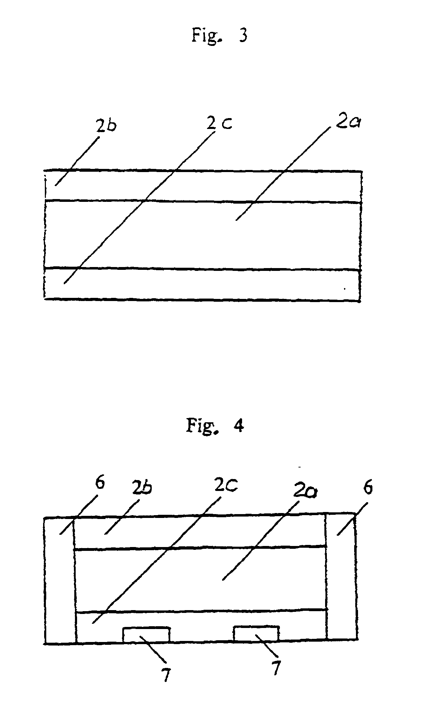

Fig. 3 zeigt eine Vorderansicht des Verformungsschiebers 2 mit der mittleren Schieberlamelle 2a sowie einer unteren (2c) und einer oberen Schieberlamelle 2b. In Fig. 4 ist ein Verformungsschieber mit weiteren längsverschiebbaren - voreilenden - Schieberelementen 7 dargestellt, mit denen der zu verformende Kunststoffschlauch 5 in einer mechanischen Verformungsstufe vorab verformt und eine gegenüber den anderen Bereichen unterschiedliche Wandstärke oder spezielle Formgebung erreicht werden kann. Seitlich und senkrecht zu den Schieberlamellen 2a bis 2c sind weitere verschiebbar geführte Schiebersegmente 6 vorgesehen, so daß sich durch unterschiedliche Endlagen der Schiebersegmente 6 und der Schieberlamellen 2a bis 2c Formteile mit bestimmten Hohlkammerstrukturen herstellen lassen.

Die verschiedenen Schieberteile - Schieberlamellen, Schiebersegmente und Schieberelemente - können unabhängig voneinander oder im Gleichlauf angetrieben werden. Sie dienen sowohl zur Ausformung der Kunststoff-Formteile als auch zu deren Entformung und können mit oder ohne Schneidkanten ausgeführt sein.

### Bezugszeichenliste:

- 1: Werkzeugtrennung
- 2: Verformungsschieber
- 2a: mittlere Schieberlamelle
- 2b: obere Schieberlamelle
- 2c: untere Schieberlamelle
- 3: Blasformwerkzeug
- 3a: linke Werkzeughälfte
- 3b: rechte Werkzeughälfte
- 4: Vakuumbohrung
- 5: Kunststoffschlauch
- 5a: Ausnehmung im Formteil (Hinterschneidung)
- 6: Schiebersegment
- 7: Schieberelement
- 8: Werkzeug-Innenkontur

## Patentansprüche

1. Verfahren zur Herstellung von Kunststoff-Formteilen mit scharfkantigen, ausgeprägten Konturen oder Hinterschneidungen durch Blasformen eines frisch extrudierten Kunststoffschlauches in einem Blasformwerkzeug, vorzugsweise von mit Ausnehmungen und/oder Durchbrüchen versehenen Trag- oder Verkleidungsteilen für Kraftfahrzeuge, bei dem der in das Blasformwerkzeug eingebrachte Kunststoffschlauch durch den pneumatischen Innendruck zunächst geweitet und an ebene oder leicht konturierte Flächen des Blasformwerkzeugs angeformt und an diesen gehalten wird, während im Anschluß daran ausgeprägte, scharfkantige Konturen durch eine mit einem Verformungsschieber auf die Außenseite des von innen pneumatisch beaufschlagten Kunststoffschlauchs ausgeübte mechanische Formgebung ausgeformt werden, und bei dem wahlweise die Innenwände des Kunststoffschlauchs aufeinandergepreßt und miteinander verschweißt werden, dadurch gekennzeichnet, daß die mechanische Formgebung zur abgestuften und schonenden Einwirkung auf die Formteilwandung in mehreren Teilschritten durchgeführt wird.

2. Verfahren nach Anspruch 1, dadurch gekennzeichnet, daß die Schlauchwände in ein und demselben Flächenbereich zur Variation der Materialstärke und zur Schaffung von Hohlräumen in diesem Bereich in den mehreren Teilverformungsschritten mit unterschiedlich großer Kraft zusammengedrückt werden.

3. Verfahren nach Anspruch 1 und 2, dadurch gekennzeichnet, daß in den zusammengepreßten Bereich nach der Formgebung Durchbrüche für hindurchzuführende Leitungen, Gestänge und dgl. eingebracht werden, wobei der verbleibende zusammengepreßte Teil einen Hinterschneidungsbereich bildet.

4. Verfahren nach einem der Ansprüche 1 bis 3, dadurch gekennzeichnet, daß gleichzeitig mit der pneumatischen und mechanischen Verformung ein in das Blasformwerkzeug eingelegter Beschichtungsstoff auf die Außenfläche des Formteils aufgepreßt bzw. in scharfkantige Vertiefungen eingeformt wird.

5. Vorrichtung zur Durchführung des Verfahrens nach Anspruch 1, mit einem den extrudierten Kunststoffschlauch (5) aufnehmenden, aus zwei Werkzeughälften bestehenden Blasformwerkzeug (3), in dessen Wandung in den zwischen den Werkzeughälften gebildeten Innenraum verschiebbare Verformungsschieber (2) zur mechanischen Einwirkung auf die Außenwände des geweiteten, vorgeformten und an dem Blaswerkzeug gehaltenen Kunststoffschlauchs geführt sind, wobei die zum Innenraum gerichtete Fläche des Verformungsschiebers vor und nach dem Formgebungsvorgang bündig an der Innenwand des Blasformwerkzeugs abschließt, dadurch gekennzeichnet, daß der Verformungsschieber (2) aus mehreren Schieberteilen (2a, 2b, 2c, 6, 7) gebildet ist, die unabhängig voneinander oder im Gleichlauf antreibbar sind.

6. Vorrichtung nach Anspruch 5, dadurch gekennzeichnet, daß der mehrteilige Verformungsschieber (2) aus mindestens zwei nebeneinander angeordneten, parallel zueinander verschiebbaren Schieberlamellen (2a bis 2c) gebildet ist.

7. Vorrichtung nach Anspruch 5 und 6, dadurch gekennzeichnet, daß an den schmalen Längsseiten der Schieberlamellen senkrecht zu diesen angeordnete, in gleicher Verschieberichtung verschiebbare Schiebersegmente (6) vorgesehen sind.

8. Vorrichtung nach einem der Ansprüche 5 bis 7, dadurch gekennzeichnet, daß an einer außenliegenden breiten Längsseite der Schieberlamellen voreilende Schieberelemente (7) angeordnet sind.

9. Vorrichtung nach einem der Ansprüche 5 bis 8, dadurch gekennzeichnet, daß die zur Ausformung und Entformung dienenden einzelnen Schieberlamellen und -segmente mit oder ohne Schneidkanten ausgebildet sind.

10. Vorrichtung nach einem der Ansprüche 5 bis 9, dadurch gekennzeichnet, daß der Verformungsschieber oder dessen einzelne Schieberlamellen, -segmente und -elemente stufenlos mechanisch, hydraulisch oder pneumatisch angetrieben sind.

11. Vorrichtung nach einem der Ansprüche 5 bis 10, dadurch gekennzeichnet, daß auf der dem Verformungsschieber (2) gegenüberliegenden Innenfläche des Blasformwerkzeugs eine Innenkontur (8) ausgebildet ist, die im wesentlichen der Außenkontur des Verformungsschiebers entspricht und in die der Verformungschieber verfahrbar ist.

12. Vorrichtung nach Anspruch 5, dadurch gekennzeichnet, daß in die Wandung des Blasformwerkzeugs (3) zur zusätzlichen Lagesicherung des Kunststoffschlauchs (5) und/oder eines mit diesem zu verpressenden Beschichtungstoffes an eine Vakuumpumpe angeschlossene Vakuumbohrungen (4) vorgesehen sind.

## Claims

1. Method of producing moulded parts of synthetic material with sharp-edged salient contours or undercuts by blow-moulding of a freshly extruded synthetic material hose in a blow-moulding tool, preferably of supporting or facing parts, which are provided with recesses and/or passages, for motor vehicles, in which the synthetic material hose introduced into the blow-moulding tool is initially enlarged by the pneumatic internal pressure and shaped at flat or slightly contoured surfaces of the blow-moulding tool and held at these, whilst consecutively thereto salient sharp-edged contours are formed by mechanical shaping exerted by a deforming slide on the outer surface of the synthetic material hose pneumatically loaded from the inside, and in which selectably the inner walls of the synthetic material hose are pressed against one another and welded together, characterised in that the mechanical shaping is carried out in several part steps for a staged and gentle action on the moulded part wall.

2. Method according to claim 1, characterised in that the hose walls are pressed together in the several part moulding steps by force of different amount in one and the same surface region for variation of the material thickness and for creation of cavities in this region.

3. Method according to claim 1 and 2, characterised in that passages for leads, rods and the like, which are to be led through, are formed in the pressed-together region after the shaping, wherein the remaining pressed-together part forms an undercut region.

4. Method according to one of claims 1 to 3, characterised in that a coating material introduced into the blow-moulding tool is pressed onto the outer surface of the moulded part or moulded into sharp-edged recesses simultaneously with the pneumatic and mechanical deforming.

5. Device for carrying out the method according to claim 1, with a blow-moulding tool (3) which receives the extruded synthetic material hose (5) and consists of two tool halves and in the wall of which deforming slides (2) displaceable in the interior space formed between the tool halves are guided for the mechanical action on the outer walls of the enlarged and preshaped synthetic material hose held at the blow-moulding tool, wherein the surface, which is directed towards the interior space, of the deforming slide is flush with the inner wall of the blow-moulding tool before and after the shaping process, characterised in that the deforming slide (2) is formed from several slide members (2a, 2b, 2c, 6, 7), which are drivable independently of one another or in unison.

6. Device according to claim 5, characterised in that the multi-part deforming slide (2) is formed from at least two slide platelets (2a to 2c) arranged adjacent to one another and displaceable parallel to one another.

7. Device according to claim 5 and 6, characterised in that slide segments (6) arranged at the narrow longitudinal sides of the slide platelets perpendicularly thereto and displaceable in the same displacement direction are provided.

8. Device according to one of claims 5 to 7, characterised in that slide elements (7) are arranged to be leading at an outwardly disposed wide longitudinal side of the slide platelets.

9. Device according to one of claims 5 to 8, characterised in that the individual slide platelets and segments serving for the shaping arid removal from the mould are constructed with or without cutting edges.

10. Device according to one of claims 5 to 9, characterised in that the deforming slide or the individual slide platelets, slide segments and slide elements thereof are steplessly driven mechanically, hydraulically or pneumatically.

11. Device according to one of claims 5 to 10, characterised in that an inner contour (8), which substantially corresponds with the outer contour of the deforming slide and in which the deforming slide is movable, is formed on the inner surface of the blow-moulding tool opposite to the deforming slide (2).

12. Device according to claim 5, characterised in that vacuum bores (4) connected to a vacuum pump are provided in the wall of the blow-moulding tool (3) for additional positional securing of the synthetic material hose (5) and/or of a coating material to be pressed together therewith.

## Revendications

1. Procédé de fabrication de pièces en plastique, plus particulièrement de pièces supports ou d'habillage pour véhicules, munies de cavités ou de perçages, avec des profils à arêtes vives, saillants ou avec des contre-dépouilles, par soufflage d'un tube plastique sortant d'extrusion dans un moule de soufflage, le tube plastique étant tout d'abord expansé sous l'effet d'une pression pneumatique, puis conformé sur les faces planes ou légèrement incurvées du moule de soufflage, et maintenu contre celui-ci, tandis que par la suite, sont formés des profils saillants, à arêtes vives sous déformation mécanique au moyen d'un coulisseau de formage, appliqué sur la paroi externe du tube plastique pneumatiquement gonflé de l'intérieur, et dans lequel les parois intérieures du tube plastique peuvent en plus être pressées l'une sur l'autre ou soudées entre elles,
caractérisé en ce que
la mise en forme mécanique graduelle et précise sur la paroi de la pièce est réalisée en plusieurs étapes.

2. Procédé selon la revendication 1,
caractérisé en ce que
les parois du tube sont pressées ensemble dans les plusieurs étapes d'élaboration, sous une force différenciée dans une même zone, pour obtenir des épaisseurs variables de matière et pour former des espaces creux dans cette zone.

3. Procédé selon l'une quelconque des revendications 1 et 2,
caractérisé en ce que
dans la zone de compression, on imprime après le formage des perçages pour des traversées de conducteurs, des tringleries et autres, la partie comprimée résultante formant alors une zone de contre-dépouille.

4. Procédé selon l'une quelconque des revendications 1 à 3,
caractérisé en ce que
en même temps que la mise en forme pneumatique et mécanique, est appliqué un matériau de revêtement introduit et pressé dans le moule de soufflage sur la surface externe de la pièce ou imprimé dans les cavités à arêtes vives.

5. Dispositif pour la réalisation du procédé suivant la revendication 1, avec un moule de formage (3) composé de deux demi-moules recevant le tube plastique (5), extrudé et dont la paroi, dans l'espace formé par les deux demi-moules, comporte des coulisseaux de formage (2), guidés exerçant une action mécanique sur les parois externes de tube plastique expansé, préformé et maintenu contre le moule de soufflage, la face dirigée vers l'espace intérieur du coulisseau de formage se termine avant et après le processus de mise en forme, en affleurement avec la partie interne du moule de soufflage,
caractérisé en ce que
le coulisseau de formage (2) est composé de plusieurs éléments coulissants (2a, 2b, 2c, 6, 7,) mobiles en synchronisme ou indépendamment.

6. Dispositif selon la revendication 5,
caractérisé en ce que
le coulisseau en plusieurs parties (2) est composé d'au moins deux lamelles (2a à 2C) disposées côte à côte, mobiles parallèlement l'une à l'autre.

7. Dispositif selon l'une quelconque des revendications 5 et 6,
caractérisé en ce que
sur les côtés longitudinaux étroits des lamelles du coulisseau, perpendiculairement à celles-ci, sont disposés des segments (6) mobiles dans la même direction.

8. Dispositif selon l'une quelconque des revendications 5 à 7,
caractérisé en ce que
sur un côté longitudinal large situé vers l'extérieur, sont disposés des éléments (7) de coulissement dépassants.

9. Dispositif selon l'une quelconque des revendications 5 à 8,
caractérisé en ce que
les différentes lamelles et segments du coulisseau servant au formage et au démoulage sont pourvues ou non d'arêtes coupantes.

10. Dispositif selon l'une quelconque des revendications 5 à 9,
caractérisé en ce que
le coulisseau de formage ou ses différentes lamelles, segments et éléments sont entraînés par une commande mécanique, hydraulique ou pneumatique.

11. Dispositif selon l'une quelconque des revendications 5 à 10,
caractérisé en ce que
sur la surface interne du moule de soufflage faisant face au coulisseau (2) est formé un profil interne (8) correspondant approximativement au profil externe du coulisseau de formage et dans lequel se déplace ce dernier.

12. Dispositif selon la revendication 5,
caractérisé en ce que
dans la paroi du moule de soufflage (3), sont disposés des perçages de vide (4) raccordés à une pompe à vide dans le but de fixer la position du tube plastique (5) ou d'un matériau de revêtement à appliquer par pression sur celui-ci.
